Europäisches Patentamt

European Patent Office

Office européen des brevets

(19)

(11) Numéro de publication: **0 068 972**
**B1**

(12) **FASCICULE DE BREVET EUROPEEN**

(45) Date de publication du fascicule du brevet:
21.11.84

(51) Int. Cl.³: **F 42 B 15/18, F 02 K 9/88**

(21) Numéro de dépôt: **82401089.6**

(22) Date de dépôt: **15.06.82**

(54) **Dispositif de pilotage par jets de gaz pour engin guidé.**

(30) Priorité: **30.06.81 FR 8112835**

(43) Date de publication de la demande:
**05.01.83 Bulletin 83/1**

(45) Mention de la délivrance du brevet:
**21.11.84 Bulletin 84/47**

(84) Etats contractants désignés:
**AT BE CH DE GB IT LI LU NL SE**

(56) Documents cités:
**AU - A - 49 985**
**FR - A - 1 293 654**
**FR - E - 82 162**
**GB - A - 865 785**
**US - A - 3 110 228**
**US - A - 3 304 721**

(73) Titulaire: **BRANDT ARMEMENTS Société anonyme de nationalité française, 52, avenue des Champs Elysées, F-75008 Paris (FR)**

(72) Inventeur: **Metz, Pierre, THOMSON-CSF SCPI 173, bld Haussmann, F-75379 Paris Cedex 08 (FR)**

(74) Mandataire: **Letellier, Bernard et al, THOMSON-CSF SCPI 173, Bld Haussmann, F-75379 Paris Cedex 08 (FR)**

BUNDESDRUCKEREI BERLIN

## Description

L'invention se rapporte au domaine des guidés; elle concerne plus spécifiquement un dispositif de pilotage par jets de gaz permettant de modifier la trajectoire de vol d'un engin.

Un engin guidé comprend notamment: des moyens de propulsion opérant sur tout ou partie de la trajectoire de vol de l'engin, des moyens de guidage destinés à mesurer les écarts de trajectoire de cet engin rapport à la position d'un objectif désigné, et des moyens de pilotage permettant de corriger ces écarts dans le but de minimiser la distance de passage de cet engin au droit de l'objectif ou cible.

La correction des écarts de trajectoire d'un engin guidé, ce dernier terme recouvrant notamment: les missiles, les fusées et certains types de projectiles et de roquettes, peut être obtenu par l'application, en un point déterminé de l'engin, d'une force de poussée latérale, c'est-à-dire, d'une force de poussée perpendiculaire à l'axe longitudinal du corps de l'engin. Cette force de poussée peut être fournie par l'éjection d'un flux de matière dont l'orientation et, éventuellement, l'intensité peuvent être modifiées; ce flux de matière étant généralement un flux de gaz.

Un dispositif de pilotage par jets de gaz, plus spécifiquement destiné à modifier la direction de vol d'un engin comprend: une source primaire d'énergie qui génère un flux de gaz, un jeu de tuyères fixes convenablement réparties sur le corps de l'engin et un moyen permettant d'aiguiller ce flux de gaz vers l'une de ces tuyères en accord avec des ordres de pilotage disponibles à bord de l'engin, ces ordres de pilotage résultant des écarts de trajectoire mesurés. Dans certaines applications des engins guidés, il est nécessaire de diposer conjointement, pendant la phase de vol, d'une force de poussée longitudinale, dans le but de maintenir la vitesse de déplacement de l'engin, et d'une force de poussée transverse afin de modifier la direction de vol de cet engin. Ceci peut être obtenu en inclinant les tuyères d'éjection vers l'arrière de l'engin et en augmentant en conséquence le débit du flux gazeux.

Les dispositifs de pilotage par jets de gaz peuvent mettre en oeuvre une source primaire d'énergie, telle qu'un propergol liquide, qui alimente une chambre de combustion pour fournir un flux de gaz. L'utilisation d'un propergol liquide permet d'obtenir une grande souplesse de fonctionnement mais au détriment d'une complexité de réalisation et de la durée de stockage possible. Aussi préfère-t-on, dans la majorité des applications aux engins guidés, utiliser des dispositifs de pilotage mettant en oeuvre un propergol solide.

Une difficulté inhérente aux propergols solides est qu'une fois la combustion amorcée, celle-ci doit se maintenir à débit gazeux relativement constant. En effet, un accroissement de débit conduirait à l'extinction de la combustion, et, inversement une diminution du débit conduirait à un accroissement prohibitif de la pression de combustion avec, pour conséquence, l'explosion de la chambre de combustion. Il est donc impératif qu'un dispositif de pilotage mettant en oeuvre un propergol solide fonctionne avec un débit de gaz continu qui ne varie que dans des limites compatibles avec le propergol utilisé.

Un problème qui se pose lors de la conception d'un dispositif de pilotage par jets de gaz est d'obtenir que la direction des forces de poussées passe par un même point situé avantageusement au voisinage du centre de gravité de l'engin et que le déplacement de ce centre de gravité lors du fonctionnement du dispositif ne varie que dans une faible limite; ce phénomène de déplacement du centre de gravité, résultant de la combustion du propergol, est d'autant plus sensible que la masse de propergol est importante.

On connaît, notamment, par FR-A-2.386.802, au nom de la Demanderesse, un dispositif de pilotage par jets de gaz opérant avec un débit de gaz continu et constant. Selon un mode de réalisation décrit dans ce document, le dispositif de pilotage comprend: deux générateurs de gaz opérant en parallèle et un jeu de quatre tuyères latérales fixes disposées en couronne sur le corps de l'engin. Ces tuyères sont reliées par des conduits de gaz à une entrée commune; dans cette entrée commune est disposée une palette à quatre branches articulées sur une rotule. Les mouvements commandés de cette palette permettent d'aiguiller le flux de gaz dans deux tuyères adjacentes qui sont ouvertes simultanément.

Le but que vise l'invention est de fournir un dispositif de pilotage par jets de gaz latéraux, dans lequel les moyens permettant d'aiguiller le flux de gaz sont du type isostatique, c'est-à-dire du type où les forces de pression induites sur le moyen d'aiguillage soient orthogonales aux forces de commande de ce moyen, et dans lequel, à instant donné, une seule tuyère est ouverte.

L'objet de l'invention est un dispositif de pilotage par jets de gaz pour engin guidé, mettant en œuvre un propergol solide, ce dispositif comprenant: un élément annulaire porte-tuyères à l'intérieur duquel est disposée coaxialement une chemise mobile munie de lumière de passage des gaz, l'intérieur de cette chemise mobile étant couplé physiquement à une source de gaz et cette chemise comprenant des moyens de positionnement permettant de positionner les lumières en regard des orifices d'entrée des tuyères en accord avec des ordres de pilotage.

Un autre objet de l'invention est un dispositif de pilotage comprenant deux générateurs de gaz disposés de part et d'autre de la chemise mobile.

Un autre objet de l'invention est un dispositif de pilotage dans lequel la section effective de passage du flux de gaz demeure sensiblement constante pendant les périodes de commutation de ce flux de gaz.

Un autre objet de l'invention est un dispositif de pilotage dans lequel le moyen permettant d'aiguiller le flux de gaz dirige, aléatoirement celui-ci vers l'une des tuyères.

D'autres caractéristiques apparaîtront dans la description détaillée qui va suivre, faite en regard des dessins annexés; sur ces dessins:

— la figure 1a représente, sous une forme schématique, les éléments constituant le dispositif de pilotage selon l'invention,

— la figure 1b représente la matrice de commutation des tuyères du dispositif de pilotage de la figure 1a;

— la figure 1c représente, sous une forme graphique, la disposition relative des orifices d'entrée des tuyères et des lumières des chemises mobiles;

— la figure 2a représente, sous une forme schématique, les positions relatives des orifices d'entrée des tuyères et des lumières d'un dispositif de pilotage comprenant une unique chemise mobile;

— la figure 2b représente la matrice de commutation des tuyères du dispositif de la figure 2a;

— la figure 3a représente, selon une vue en coupe longitudinale, un mode de réalisation d'un dispositif de pilotage, selon l'invention, comprenant deux chemises mobiles;

— la figure 3b représente, selon une vue en coupe longitudinale, les détails de réalisation des électrovannes de commande d'un dispositif de pilotage comprenant deux chemises mobiles;

— la figure 3c représente, selon une vue en coupe transversale, les détails de réalisation d'un vérin rotatif de positionnement des chemises mobiles,

— la figure 3d représente, selon une coupe transversale, la disposition relative des chemises mobiles pour une orientation déterminée du flux de gaz éjecté;

— la figure 4a représente, selon une vue partielle simplifiée, en coupe longitudinale, un mode de réalisation d'un dispositif de pilotage, selon l'invention, comprenant une unique chemise mobile;

— la figure 4b représente, selon une vue en coupe transversale B—B, les détails de réalisation des moyens pneumatiques de positionnement de la chemise mobile;

— la figure 4c représente, selon une vue en coupe transversale A—A la position relative des lumières de la chemise mobile et des orifices d'entrée des tuyères;

— la figure 5a représente, selon une vue perspective, un moyen pneumatique permettant la translation de la chemise mobile;

— la figure 5b représente, selon une vue perspective, un moyen pneumatique permettant la rotation de la chemise mobile.

Les générateurs de gaz qui ne font pas partie de l'invention et sont connus des spécialistes de la construction des engins ne seront pas décrits.

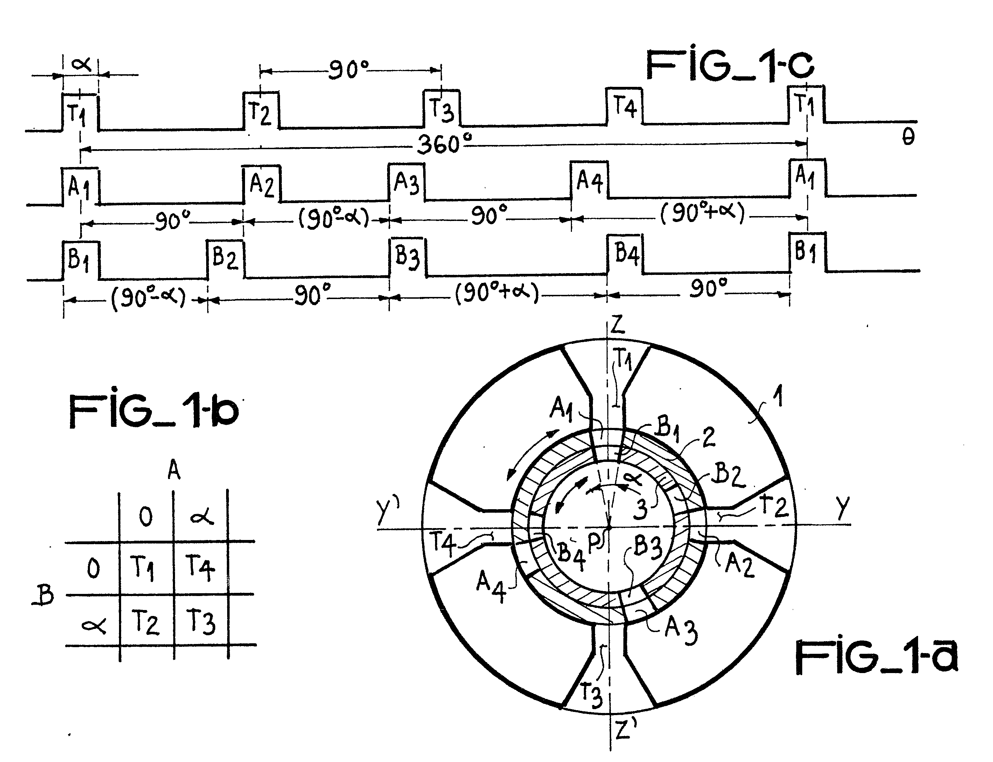

La figure 1a illustre le concept inventif mis en œuvre dans le dispositif de pilotage qui sera décrit ci-après; elle représente, sous une forme schématique, selon une vue partielle, en coupe transversale, les éléments essentiels constituant le dispositif de pilotage selon l'invention; ce dispositif de pilotage comprend:

— un élément annulaire 1 d'axe longitudinal X, X', comprenant, à titre d'exemple, quatre tuyères latérales $T_1$ à $T_4$, toutes identiques, qui sont disposées dans un même plan perpendiculaire à l'axe longitudinal X, X'; ces tuyères étant orientées selon deux plans de pilotage respectivement Y, Y' et Z, Z' auxquels correspondent une première paire de tuyères $T_2$, $T_4$. La direction des forces de poussées fournies par chacune des tuyères concourent en un point P situé sur l'axe longitudinal X, X' perpendiculaire aux plans de guidage; et

— une première et une seconde chemises coaxiales mobiles 2 et 3, disposées à l'intérieur de l'élément annulaire porte-tuyères 1; ces deux chemises sont munies chacune de quatre lumières de passage des gaz, toutes identiques; les lumières $A_1$ à $A_4$ correspondent à la première chemise 2 et les lumières $B_1$ à $B_4$ correspondent à la seconde chemise 2. La partie intérieure de la seconde chemise, ou chemise interne, est mise en communication avec au moins un générateur de gaz. Les couples de lumières $A_1$-$B_1$, $A_2$-$B_2$, $A_3$-$B_3$ et $A_4$-$B_4$ sont toujours associés respectivement aux tuyères $T_1$ à $T_4$ correspondantes.

Les deux chemises mobiles sont libres de tourner l'une par rapport à l'autre, autour de l'axe longitudinal X, X', d'un angle $\alpha$ correspondant à l'arc $\alpha$ des orifices d'entrée des tuyères, et des moyens de positionnement de ces chemises sont prévus à cet effet; les centres des lumières sont situés dans un plan passant par les centres des orifices d'entrée des tuyères. Pour chacune des chemises, l'espacement angulaire relatif de deux des quatre lumières est égal à 90° et l'espacement relatif des deux autres lumières est égal respectivement à $(90° - \alpha)$ et à $(90° + \alpha)$.

La figure 1b représente la matrice de commutation des quatre tuyères $T_1$ à $T_4$, en fonction de la rotation des lumières correspondantes A ($A_1$ à $A_4$) et B ($B_1$ à $B_4$). Cette matrice de commutation n'est pas unique et dépend de la position relative des lumières, cette matrice de commutation définit la séquence de commutation des tuyères.

La figure 1c représente, sous une forme graphique, la disposition relative des tuyères et des lumières des deux chemises mobiles dans la configuration représentée sur la figure 1a.

On peut noter, déjà, que ces deux chemises mobiles constituent un système isostatique, ou équilibré, puisque les forces de pression, induites par le flux de gaz traversant sont toujours orthogonales aux forces de positionnement des deux chemises. Différentes variantes de positionnement de ces deux chemises mobiles sont possibles: selon une première variante les chemises mobiles peuvent être translatées, l'une par rapport à l'autre, parallèlement à l'axe longitudinal X, X' du dispositif de pilotage et selon une seconde variante, l'une des chemises peut être positionnée par un mouvement de translation parallèle à l'axe X, X' et l'autre par un mouvement de rotation, autour de l'axe X, X', à condition toutefois de positionner correctement les deux jeux de lumières ($A_1$ à $A_4$) et ($B_1$ à $B_4$).

Par réciprocité, l'une des paires de tuyères peut être décalée longitudinalement par rapport à l'autre paire de tuyères, à condition d'adapter la position des lumières en conséquence.

En se reportant maintenant à la figure 1a, on peut voir qu'il est possible d'aboutir à un résultat similaire si l'on supprime la seconde chemisée 3 et que l'on conserve uniquement la première chemise 2. Cette chemise unique doit alors être libre de se déplacer, d'une part selon un mouvement de rotation autour de l'axe longitudinal X, X' et, d'autrepart, selon un mouvement de translation parallèlement à cet axe X, X', cette chemise unique doit alors être munie de moyens de positionnement correspondant et de lumières correctement positionnées.

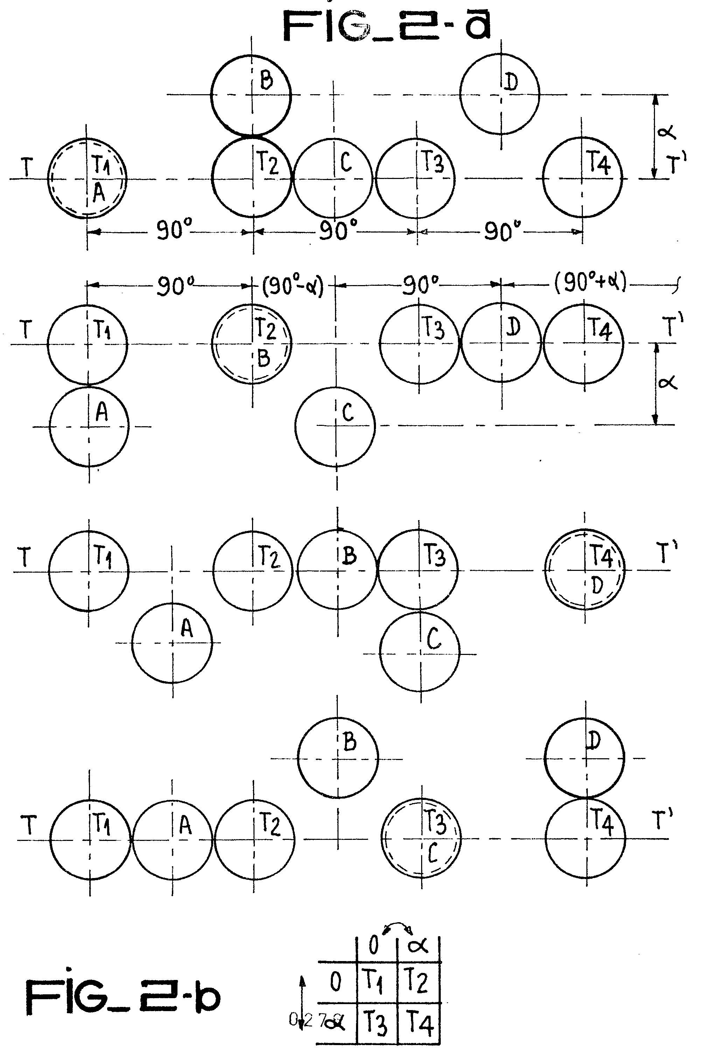

La figure 2a représente, sous une forme schématique, selon une vue développée, les positions respectives des orifices l'entrée des tuyères $T_1$ et $T_4$ et des lumières (A à D) ménagés dans une chemise unique pouvant être déplacée par rotation suivant la ligne fictive T, T' des tuyères, et par translation suivant une direction orthogonale à cette ligne fictive. Les quatre tuyères $T_1$ à $T_4$ étant situées un même plan, les deux couples de lumières, respectivement A, C et B, D sont décalés longitudinalement l'un par rapport à l'autre, ces couples étant toujours associés aux paires de tuyères correspondantes $T_1$, $T_3$ et $T_2$, $T_4$.

La figure 2b représente la matrice de commutation des tuyères en fonction des mouvements de rotation (double flèche courbe) et de translation (double flèche rectiligne). Comme indiqué précédemment, cette matrice de commutation n'est pas unique et dépend effectivement de la position relative des lumières de la chemise. Elle permet de définir les différentes séquences de commutation possibles du flux de gaz dans l'une des quatre tuyères.

Toujours par réciprocité, une paire de tuyères peut être décalée l'une par rapport à l'autre paire de tuyères, à condition d'adapter en conséquence la position relative des lumières correspondantes.

Dans le cas de l'application du dispositif de pilotage à un engin guidé nécessitant une force de propulsion durant sa trajectoire de vol, les tuyères latérales peuvent être inclinées pour fournir conjointement une force de pousées longitudinale permettant d'entretenir la vitesse en l'engin et une force transversale destinée à modifier la direction de vol de cet engin. La section des orifices d'entrée des tuyères peut être de forme circulaire, elliptique, rectangulaire et, en général, de toute forme permettant de maintenir constante la section effective de passage du flux de gaz traversant en fonction de la position de la ou des chemises mobiles. Les moyens destinés au positionnement de la ou des chemises peuvent être avantageusement du type pneumatique et l'énergie nécessaire a leur fonctionnement peut être prélevée au flux de gaz fourni par le générateur de gaz.

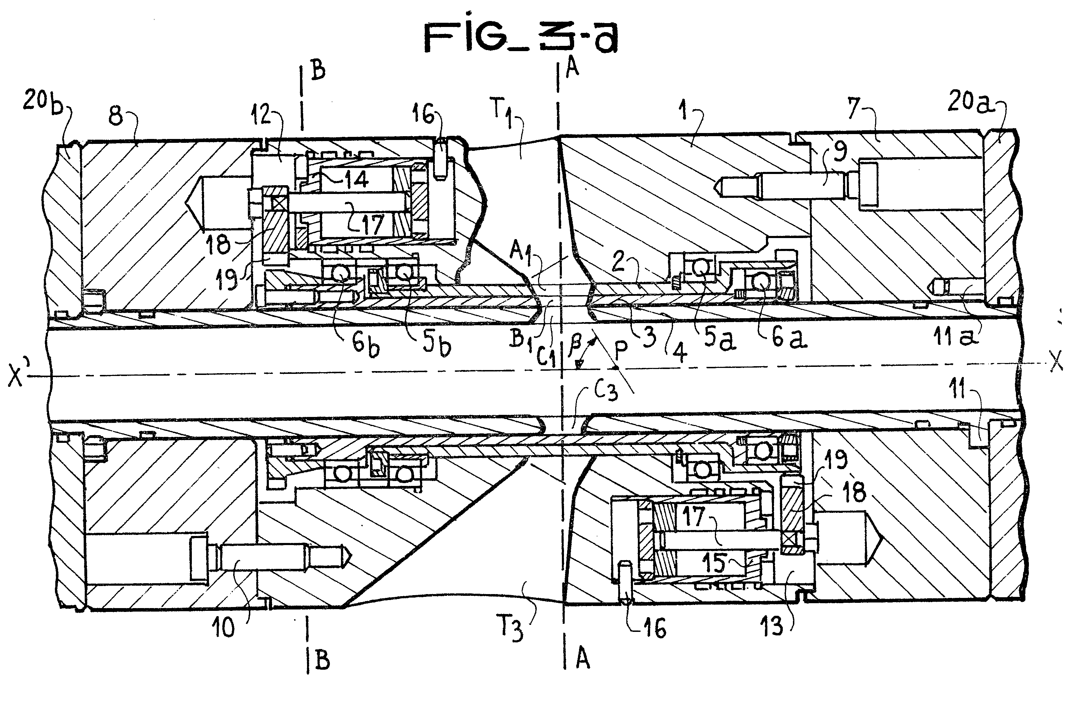

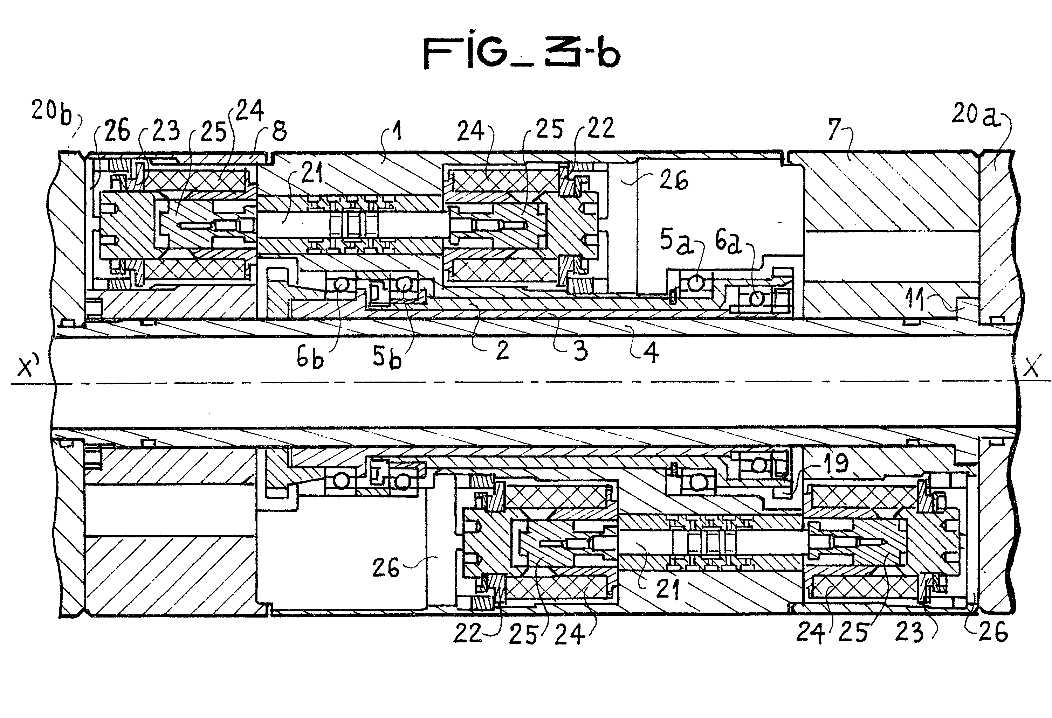

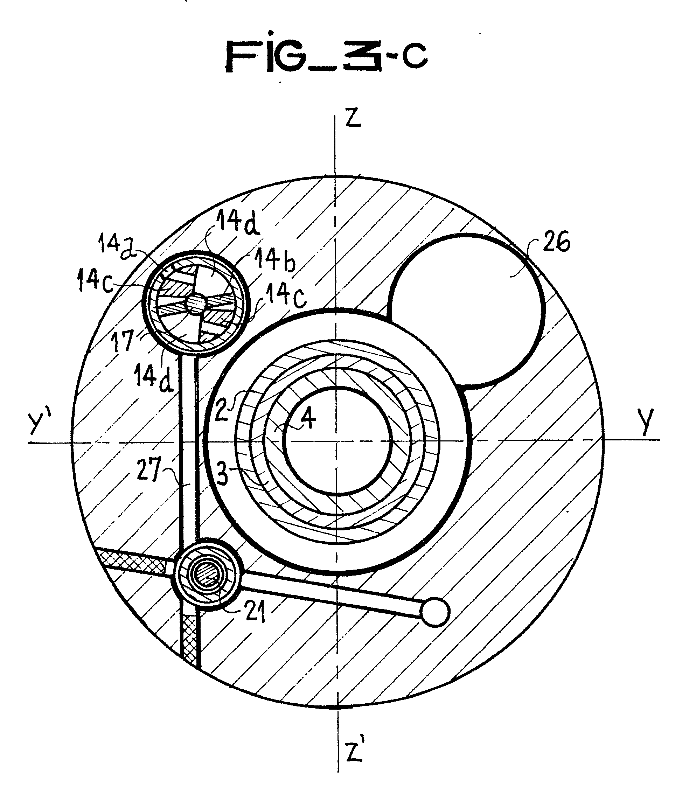

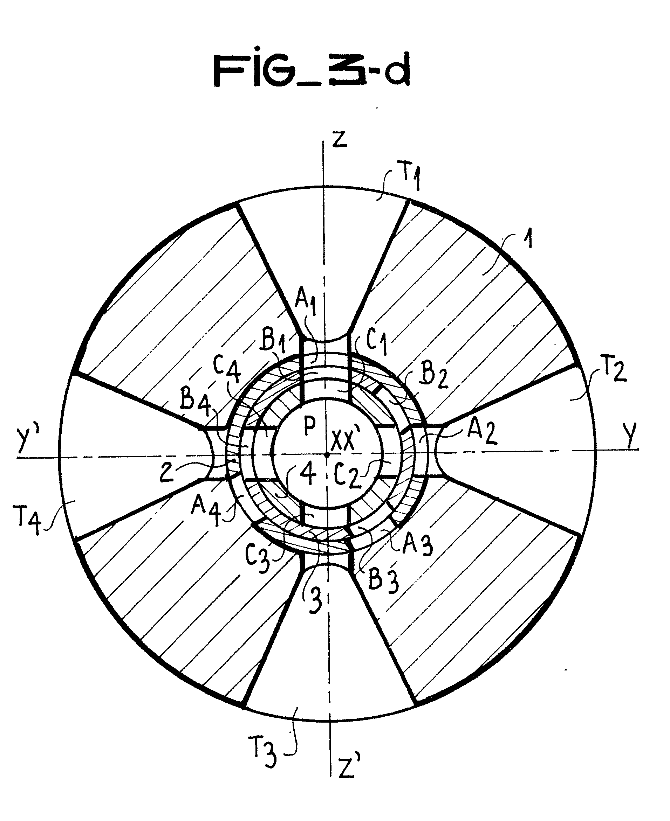

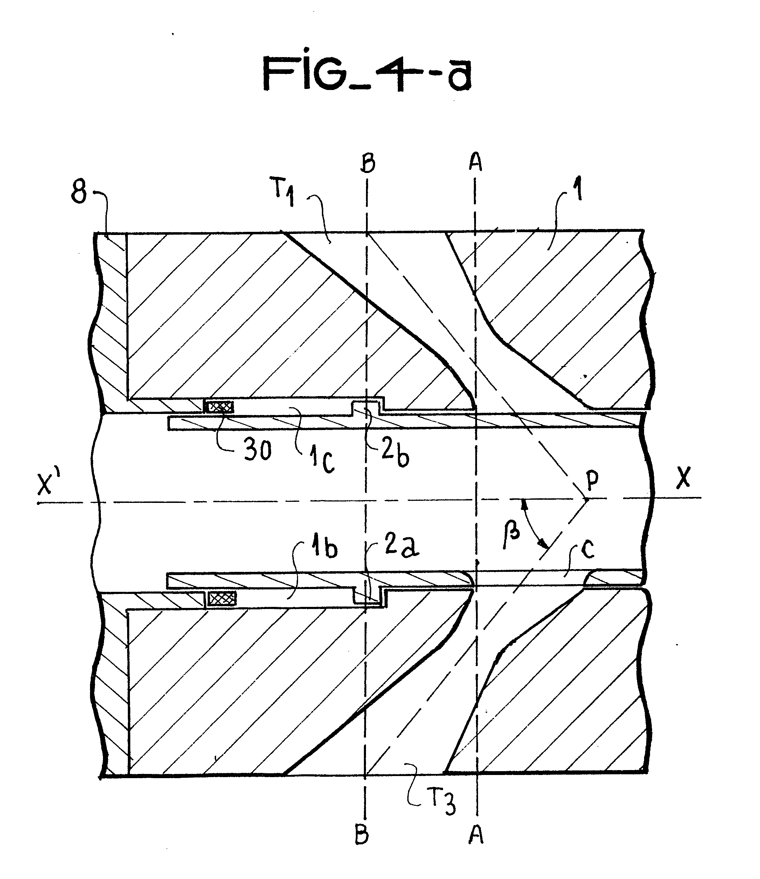

Les figures 3a à 3d représentent un mode de réalisation d'un dispositif de pilotage comprenant deux chemises mobiles comme décrit précédemment. La figure 3a représente, selon une vue en coupe longitudinale, les éléments suivants:

— un élément annulaire 1 porte-tuyères d'axe longitudinal X, X';
  cet élément annulaire comportant un jeu de quatre tuyères associées par paire, seule, sur cette figure 2a apparaît une première paire de tuyères $T_1$, $T_3$ diamétralement opposées. Les orifices d'entrée des quatre tuyères étant situés dans un même plan et l'orientation de ces tuyères étant inclinée d'un angle $\beta$ sur l'axe longitudinal X, X', la direction des forces de poussée de ces tuyères passe par un même point P; ces tuyères peuvent éventuellement être munies d'opercules d'étanchéité éjectables, comme connu en soi.
— une première chemise mobile 2, incluant quatre lumières de passage des gaz telles que $A_1$ et une seconde chemise mobile 3, incluant également quatre lumières de passage des gaz telles que $B_1$;
— une chemise fixe 4 incluant quatre lumière de passage des gaz telles que $C_1$ et $C_3$; ces quatre lumières ($C_1$ à $C_4$) étant angulairement équidistantes et situées en regard des orifices d'entrée des tuyères;
— des moyens permettant de positionner angulairement les deux chemises mobiles 2 et 3; ces moyens seront décrits ci-après.

L'élément annulaire 1 est muni intérieurement d'un couple de roulements à billes 5a et 5b qui supporte la première chemise mobile 2 et assure la rotation de celle-ci autour de l'axe longitudinal X, X'. La seconde chemise mobile 3 est portée par un couple de roulements à billes 6a et 6b, le roulement à billes 6b étant porté par la première chemise mobile assurant ainsi la libre rotation de cette seconde chemise autour de l'axe longitudinal X, X'. A chacune des extrémités de l'élément annulaire 1 porte-tuyères, sont disposés un premier élément annulaire 7 et un second élément annulaire 8 dont le diamètre intérieur est sensiblement égal au diamètre intérieur de la seconde chemise mobile 3, afin de recevoir la chemise fixe 4. Chacune des extrémités de cette chemise fixe est couplée respectivement à un générateur de gaz, ces générateurs de gaz opérant alors en parallèle pour fournir un flux de gaz dont le débit continu est sensiblement constant pendant la durée de combustion des propergols. Les éléments annulaires auxiliaires sont rendus physiquement solidaires de l'élément annulaire porte-tuyères par un jeu de boulons tels que 9 et 10 et la chemise fixe 4 est munie d'une protubérance annulaire 11 permettant de positionner longitudinalement ses propres lumières $C_1$ à $C_4$, le moyen permettant de positionner angulairement ces lumières étant fourni par une clavette 11a.

L'élément annulaire porte-tuyères comporte deux chambrages 12 et 13 destinés au logement d'un premier et d'un second vérins rotatifs à double effet 14 et 15 permettant de positionner angulairement, respectivement, les première et seconde chemises mobiles. Les deux vérins rotatifs 14 et 15 sont calés angulairement par des clavettes 16 engagées dans l'élément annulaire porte-tuyères. Selon un mode de réalisation possible, ces deux vérins sont du type pneumatique à deux positions commandées indépendamment par des électrovannes qui seront décrites ultérieurement. Les axes de sortie 17 de ces vérins rotatifs sont munis de secteurs dentés 18 qui s'engagent dans des couronnes dentées 19 solidaires des chemises mobiles. Enfin, les éléments annulaires auxiliaires 7 et 8 sont équipés de pièces de liaison 20a et 20b avec les générateurs de gaz.

La figure 3b représente selon une vue longitudinale, des détails de réalisation des deux électrovannes de commande des vérins rotatifs 14 et 15 représentés sur la figure 3a. Ces électrovannes comprennent: un tiroir de distribution 21 disposé dans l'élément annulaire porte-tuyères, ce tiroir étant actionné par deux électroaimants 22 et 23, chacun de ces électroaimants incluant notamment un bobinage électrique 24 et un noyau magnétique coulissant 25 physiquement solidaire du tiroir de distribution correspondant 21. Ces électroaimants sont placés à l'intérieur de chambrages 26 disposés dans les éléments annulaires porte-tuyères et auxiliaires.

La figure 3c représente, selon une vue en coupe transversale B-B, à titre illustratif, les détails de réalisation des composants pneumatiques des moyens de positionnement angulaire des chemises mobiles. Un vérin rotatif, tel que 14, comprend un boîter cylindrique 14a traversé par l'axe de sortie 17 sur lequel sont montées en ligne deux palettes orthogonales telles que 14b séparées par une cloison, non représentée, pour créer des cavités dans lesquelles sont disposées des pièces d'alimentation 15c en gaz, ces pièces permettant conjointement de créer deux cavités 14d. Ce vérin pneumatique est relié par deux canalisations au tiroir de distribution 21; une seule de ces canalisation 27 étant représentée sur la figure.

La figure 3d représente, selon une coupe transversale A-A, la disposition relative des chemises mobiles lorsque la tuyère $T_1$ est traversée par le flux de gaz.

Les éléments du dispositif de pilotage qui sont en contact direct avec le flux de gaz doivent être réalisés en un matériau réfractaire à de faible érosion tel que le graphite ou encore le molybdène, les autres éléments pouvents être réalisés en un alliage léger.

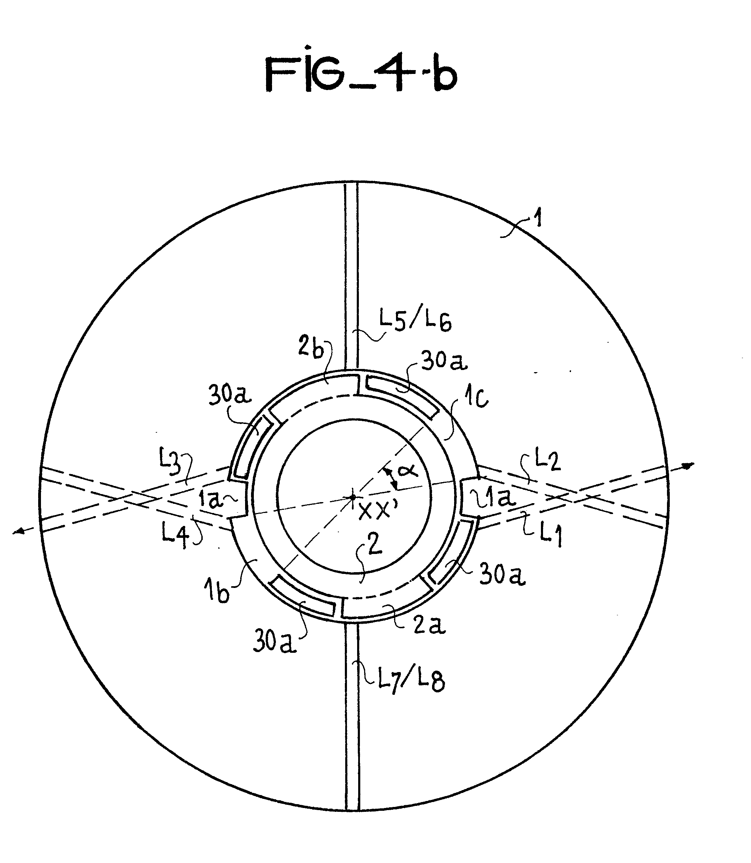

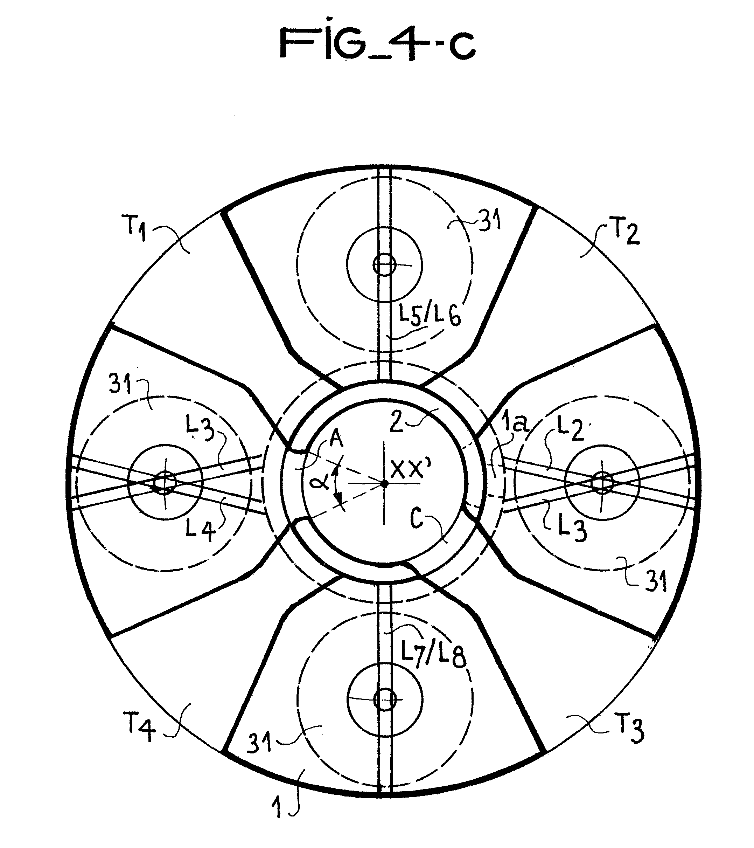

Les figures 4a à 4c représentent un mode de réalisation d'un dispositif de pilotage comprenant une unique chemise mobile en rotation et en translation comme décrit précédemment.

Les mouvements de translation et de rotation de cette unique chemise mobile peuvent être obtenus par l'application de forces de pression sur des bossages disposés sur la face externe de la chemise.

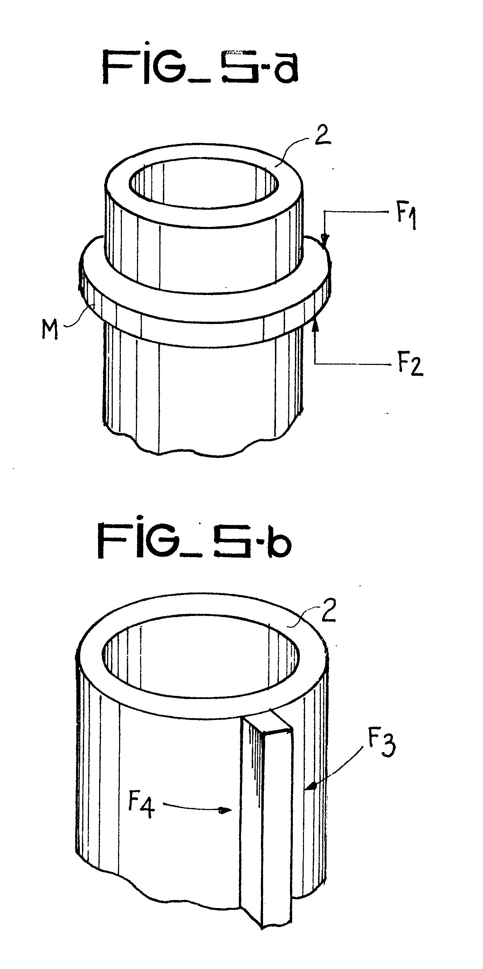

La figure 5a représente un mode de réalisation d'un premier bossage permettant la translation longitudinale de la chemise mobile 2; ce bossage peut être constitué par une protubérance M de forme annulaire dont les deux faces latérales sont soumises respectivement à des forces de pression inégales F1 et F2.

La figure 5b représente d'un second bossage permettant la rotation de la chemise; ce bossage peut être constitué par une protubérance N de forme rectiligne dont les deux faces latérales sont soumises respectivement à des forces de pression inégales F3 et F4.

Les forces de pression inégales peuvent être obtenues en créant une fuite de gaz du côté correspondant au mouvement désiré. Selon une variante de réalisation l'un des bossages peut être solidaire de chemise mobile, et l'autre bossage peut être une pièce indépendante, encastrée dans le précédent bossage comme il sera décrit ultérieurement.

On se référera maintenant à la figure 4a, qui représente, selon une vue partielle en coupe longitudinale, un dispositif de pilotage incluant une chemise unique; ce dispositif de pilotage comprenant les éléments suivants:

— un élément annulaire 1 porte-tuyères d'axe longitudinal X, X', cet élément annulaire comportant un jeu de quatre tuyères associées par paire, telle que la paire de tuyères $T_1$ et $T_3$ diamétralement opposée. Les orifices d'entrée des tuyères $T_1$ à $T_4$ étant situées dans un même plan et l'orientation de ces tuyères étant inclinée d'un angle $\beta$ sur l'axe longitudinal X, X', la direction des forces de poussée fournies par ces tuyères passe par un même point P; et

— une chemise mobile 2, incluant quatre lumières de passage des gaz, telles que la lumiére C associée d'entrée de la tuyère $T_3$; cette chemise mobile étant libre, d'une part, de coulisser parallèlement à l'axe X, X' et d'autre part, de tourner autour de cet axe X, X'. Cette chemise mobile comprend deux bossages annulaires 2a et 2b destinés à fournir un moyen de translation longitudinale de cette chemise. L'élément annulaire 1 porte-tuyères est solidaire d'une pièce d'accouplement 8, qui en combinaison avec la chemise mobile 2 crée deux cavités 1b et 1c de forme torique, à l'intérieur de ces cavités toriques est disposée une pièce de forme cylindrique 30 libre de tourner sans translation sur la chemise mobile, cette pièce cylindrique est encastrée dans les bossages 2a et 2b et fournit le moyen permettant la rotation de la chemise mobile comme il sera décrit ci-après.

La figure 4b représente, selon une vue simplifiée en coupe frontale B-B, les détails de réalisation des moyens pneumatiques permettant de positionner angulairement et longitudinalement la chemise mobile 2. L'élément annulaire 1 porte-tuyères comporte deux bossages rectilignes 1a qui en combinaison avec la chemise mobile 2 délimitent une première cavité 1b et une seconde cavité 1c. D'une part, la chemise mobile comporte deux bossages 2a et 2b diamétralement opposés et situés respectivement dans les première et seconde cavités et d'autre part, la pièce cylindrique 30 comporte quatre branches 30a, encastrées dans les bossages 2a et 2b de la chemise mobile 2; cette pièce cylindrique peut tourner sans coulisser à l'intérieur des deux cavités 1b et 1c. Les différentes parties des cavités 1c et 1b peuvent être connectées à des électrovannes de commande par des conduits de gaz: des conduits L1 à L4 pour commander le mouvement de rotation de la pièce cylindrique 30 et des conduits L5 à L8 pour commander le mouvement de translation des bossages 2a et 2b et par voie de conséquence le mouvement de translation de la chemise mobile. Sur cette figure 4b, les conduits L5 et L7 sont décalés longitudinalement pu par rapport aux conduits L6 et L8. Ces conduits L1 à L8 sont reliés aux sorties correspondantes d'électrovannes non représentées.

La figure 4c représente, selon une vue en coupe frontale A-A', la position relative des lumières A et C et des tuyères correspondantes $T_1$ et $T_3$ lorsque le flux de gaz est aiguillé dans la tuyère $T_3$. A titre indicatif, sont représentés en traits pointillés, quatre chambrages 31 destinés au logement d'électrovannes de commande des mouvements de la chemise mobile, ces électrovannes opérant en parallèle par paire.

On voit maintenant plus clairement les avantages complémentaires que présente un dispositif de pilotage selon l'invention, notamment: la chemise à lumières étant ouverte à ses deux extrémités, couplage de celle-ci avec deux générateurs de gaz disposés symétriquement rapport au point P d'application des forces de poussée est facilité, d'un autre côté les chemises à lumières étant des pièces de révolution peuvent être usinées avec de faibles tolérances et les roulements à billes peuvent être remplacés par des paliers lisses.

L'invention n'est pas strictement aux modes de réalisation décrits pécédemment, notamment: le nombre et la répartition des lumières des chemises peuvent être modifiés en accord avec la dispostion des tuyères, les vérins pneumatiques de type rotatif peuvent être remplacés par des vérins linéaires, ces vérins pneumatiques pouvant être éventuellement remplacés par des actuateurs électriques ou hydrauliques.

Un mode de réalisation d'un dispositif de pilotage comprenant deux chemises mobiles positionées en rotation de l'axe longitudinal X, X' du dispositif a été décrit en détails: aussi faut-il considérer qu'un dispositif de pilotage dans lequel des leux chemises sont positonnées à cet axe X, X' s'en déduit directement.

Le dispositif de pilotage selon l'invention trouve son application dans les missiles, les projectiles, les fusées du type guidé ou autoguidé opérant dans l'atmosphère ou en dehors de celle-ci.

## Revendications

1. Dispositif des pilotage par jets de gaz pour engin guidé, mettant en œuvre un propergol solide, comprenant un jeu der tuyères fixes ($T_1 - T_1$) orientées selon les plans de pilotage (YY', ZZ'), caractérisé en ce qu'il comprend un élément annulaire (1) porte-tuyères à l'intérieur duquel sont disposées coaxialement une première (2), puis une seconde (3) mobiles; chacune de ces deux chemises comportant un jeu de lumière ($A_1 - A_i$, $B_1 - B_i$) de passage du gaz et des moyens de positionnement par rapport à l'élément annulaire porte-tuyères.

2. Dispositif selon la revendication 1 caractérisé en ce que les première et seconde chemises sont mobiles en rotation par rapport à l'élément annulaire (1) porte-tuyères.

3. Dispositif selon la revendication 1 caractérisé en ce que l'une des deux chemises est mobile en rotation et l'autre est mobile en translation par rapport à l'élément annulaire (1) porte-tuyères.

4. Dispositif selon la revendication 1 caractérisé en ce que les deux chemises sont mobiles en translation par rapport à l'élément annulaire (1) porte-tuyères.

5. Dispositif selon l'une des revendications précédentes, caractérisé en ce que chacune des extrémités de la seconde chemise mobile est couplée à un générateur de gaz.

6. Dispositif selon la revendication 2 caractérisé en ce que les moyens de postitionnement des première et seconde chemises comprennent un vérin pneumatique rotatif (14), à deux positions stables, monté dans un chambrage (12, 13) situé dans l'élément annulaire (1) porte-tuyères et couplé mécaniquement (18, 19) à la partie externe de la chemise.

7. Dispositif selon l'une des revendications précédentes, caractérisé en ce qu'il comprend une troisième chemise (4) qui comporte un jeu de lumières ($C_1 - C_i$) de passage des gaz, cette troisième chemise étant adjacente à la seconde (3) et fixé rigidement à l'élément annulaire (1) porte-tuyères.

8. Dispositif selon la revendication 7, caractérisé en ce que chacune des extrémités de cette troisième chemise (4) est couplée à un générateur de gaz.

9. Dispositif de pilotage par jets de gaz pour engin guidé, mettant en œuvre un propergol solide, comprenant un jeu de quatre tuyères fixes ($T_1 - T_4$) également espacées et orientées selon les plans de pilotage (YY', ZZ'), caractérisé en ce qu'il comprend un élément annulaire (1) porte-tuyères à l'intérieur duquel est disposée coaxialement une chemise mobile en rotation et en translation par rapport à son axe longitudinal (XX'), cette chemise comportant un jeu de quatre lumières (A—C) de passage du gaz et des moyens de positionnement (M, N) par rapport à l'élément annulaire porte-tuyères.

10. Dispositif selon la revendication 9, caractérisé en ce que l'élément annulaire porte-tuyères et la chemise mobile délimitent une cavité de forme torique (1b, 1c) et en ce que cette chemise mobile, au droit de la cavité, comporte des bossages (M, N) sur les faces latérales desquelles sont créées des forces de pression différentielles (F₁—F₄) pour fournir la rotation et la translation de la chemise.

11. Dispositif selon la revendication 9, caractérisé en ce que chacune des extrémités libres de la chemise mobile est couplée un générateur de gaz.

## Patentansprüche

1. Gasstrahl-Lenkvorrichtung, die einen Satz fester Düsen ($T_1$—$T_i$) umfaßt, welche gemäß den Lenkebenen (Y, Z) orientiert sind, dadurch gekennzeichnet, daß sie ein ringförmiges Düsenträgerelement (1) umfaßt, in dessen Innerem koaxial eine erste (2) und eine zweite (3) bewegliche Manschette angeordnet sind; wobei jede dieser Manschetten einen Satz von Gasdurchtrittsöffnungen ($A_{1-}$—$A_i$, $B_1$—$B_i$) und Mittel zur Positionierung in bezug auf das ringförmige Düsenträgerelement umfaßt.

2. Vorrichtung nach Anspruch 1, dadurch gekennzeichnet, daß die erste und die zweite Manschette drehbeweglich in bezug auf das ringförmige Düsenträgerelement (1) sind.

3. Vorrichtung nach Anspruch 1, dadurch gekennzeichnet, daß eine der zwei Manschetten drehbeweglich und die andere translationsbeweglich in bezug auf das ringförmige Düsenträgerelement (1) ist.

4. Vorrichtung nach Anspruch 1, dadurch gekennzeichnet, daß die zwei Manschetten translationsbeweglich in bezug auf das ringförmige Düsenträgerelement (1) sind.

5. Vorrichtung nach einem der vorstehenden Ansprüche, dadurch gekennzeichnet, daß jedes der Enden der zweiten beweglichen Manschette an einen Gasgenerator angekoppelt ist.

6. Vorrichtung nach Anspruch 2, dadurch gekennzeichnet, daß die Mittel zur Positionierung der ersten und der zweiten Manschette einen pneumatischen Drehsteller (14) mit zwei stabilen Stellungen umfassen, welcher in einer Aufnahmekammer (12, 13) angebracht ist, die in dem ringförmigen Düsenträgerelement (1) liegt, und mechanisch (18, 19) an den Außenteil der Manschette angekoppelt ist.

7. Vorrichtung nach einem der vorstehenden Ansprüche, dadurch gekennzeichnet, daß sie eine Manschette (4) umfaßt, die einen Satz von Gasdurchgangsöffnungen ($C_1$—$C_i$) umfaßt, wobei diese dritte Manschette an die zweite (3) angrenzt und starr an dem ringförmigen Düsenträgerelement (1) befestigt ist.

8. Vorrichtung nach Anspruch 7, dadurch gekennzeichnet, daß jedes der Enden dieser dritten Manschette (4) an einem Gasgenerator angekoppelt ist.

9. Gasstrahl-Lenkvorrichtung, mit einem Satz von vier festen Düsen ($T_1$—$T_4$), die gleichmäßig beanstandet und gemäß den Lenkebenen (Y, Z) angeordnet sind, dadurch gekennzeichnet, daß sie ein ringförmiges Düsenträgerelement (1) umfaßt, in dessen Innerem koaxial eine in bezug auf ihre Längsachse (X) drehbeweglich und translationsbewegliche Manschette angeordnet ist, die einen Satz von vier Gasdurchtrittsöffnungen (A—C) sowie Mittel (M, N) zur Positionierung in bezug auf das ringförmige Düsenträgerelement umfaßt.

10. Vorrichtung nach Anspruch 9, dadurch gekennzeichnet, daß das ringförmige Düsenträgerelement und die bewegliche Manschette einen torusförmigen Hohlraum (1b, 1c) begrenzen und daß diese bewegliche Manschette in der Senkrechten des Hohlraumes Erhebungen (M, N) umfaßt, an deren Seitenflächen differentielle Druckkräfte ($F_1$—$F_4$) erzeugt werden, um die Drehung und Translationsverschiebung der Manschette zu erhalten.

11. Vorrichtung nach Anspruch 9, dadurch gekennzeichnet, daß jedes der freien Enden der beweglichen Manschette an einen Gasgenerator angekoppelt ist.

## Claims

1. Gas jet pilot device comprising a set of fixed pipes ($T_1$—$T_i$) directed along the guide planes (Y, Z), characterized in that it comprises an annular pipe carrier member (1) inside of which a first (2) and a second (3) movable sleeves are coaxially arranged; each of these two sleeves comprising a set of gas passage openings ($A_1$—$A_i$, $B_1$—$B_i$) and means for positioning with respect to the annular pipe carrier member.

2. Device according to claim 1, characterized in that the first and second sleeves are rotatably movable with respect to the annular pipe carrier member (1).

3. Device according to claim 1, characterized in that one of the two sleeves is rotatably movable and the other is translationally movable with respect to the annular pipe carrier member (1).

4. Device according to claim 1, characterized in that the two sleeves are translationally movable with respect to the annular pipe carrier member (1).

5. Device according to any of the preceding claims, characterized in that each of the ends of the second movables sleeve is coupled to a gas generator.

6. Device according to claim 2, characterized in that the positioning means of the first and second sleeves comprise a pneumatic rotary actuator (14) having two stable positions and mounted within a chamber (12, 13) located within the annular pipe carrier member (1) and mechanically coupled (18, 19) to the external portion of the sleeve.

7. Device according to any of the preceding claims, characterized in that ist comprises a third sleeve (4) having a set of gas passage openings $(C_1 - C_i)$, this third sleeve being adjacent to the second (3) and rigidly fixed to the annular pipe carrier member (1).

8. Device according to claim 7, characterized in that each of the ends of this third sleeve (4) is coupled to a gas generator.

9. Gas jet pilot device comprising a set of four fixed pipes $(T_1 - T_4)$ equally spaced and directed along the guide planes (Y, Z), characterized in that it comprises an annular pipe carrier member (1) inside of which a sleeve is coaxially arranged which is movable in rotation and translation with respect to its longitudinal axis (X), this sleeve comprising a set of four gas passage openings $(A - C)$ and means (M, N) for the positioning with respect to the annular pipe carrier member.

10. Device according to claim 9, characterized in that the annular pipe carrier member and the movable sleeve define a cavity of toric shape (1b, 1c) and in that this movable sleeve comprises protrutions (M, N) in the perpendicular of the cavity and on the lateral faces of which differential pressure forces $(F_1 - F_4)$ are generated to provide for the rotation and translation of the sleeve.

11. Device according to claim 9, characterized in that each of the free ends of the movable sleeve is coupled to a gas generator.

Fig_1-a

Fig_1-b

| | A | |
|---|---|---|
| | 0 | $\alpha$ |
| B 0 | $T_1$ | $T_4$ |
| $\alpha$ | $T_2$ | $T_3$ |

Fig_1-c

0 068 972

# FiG_2-a

# FiG_2-b

11

FIG_3-a

FiG_3-b

# FiG_3-c

# FIG_3-d

FIG_4-a

# FiG_4·b

# FIG_4·c

# FIG_5-a

# FIG_5-b